# FASCICULE DE BREVET EUROPEEN

(11) **EP 2 044 373 B1**
(45) Date de publication et mention de la délivrance du brevet: **06.01.2010**
(21) Numéro de dépôt: 07823264.2
(22) Date de dépôt: 09.07.2007
(51) Int. Cl.: F25B 21/00

(54) **GENERATEUR THERMIQUE MAGNETOCALORIOUE**
MAGNETOKALORISCHER WÄRMEGENERATOR
MAGNETOCALORIC THERMAL GENERATOR

(30) Priorité: 24.07.2006 FR 0606750
(43) Date de publication de la demande: 08.04.2009
(73) Titulaire: Cooltech Applications S.A.S., 67810 Holtzheim (FR)
(72) Inventeur: MULLER, Christian, F-67000 Strasbourg (FR); DUPIN, Jean-Louis, F-68320 Muntzenheim (FR); HEITZLER, Jean-Claude, F-68180 Horbourg-Wihr (FR); NIKLY, Georges, F-67400 Illkirch-Graffenstaden (FR)
(74) Mandataire: Nithardt, Roland
(86) Numéro de dépôt international: PCT/FR2007/001171
(87) Numéro de publication internationale: WO 2008/012411

(56) Documents cités:
- FR-A1- 2 864 211
- US-A- 4 642 994

## Description

### Domaine technique :

La présente invention concerne un générateur thermique magnétocalorique comportant des éléments thermiques à matériau magnétocalorique, des moyens magnétiques agencés pour créer une variation de champ magnétique dans lesdits éléments thermiques et faire varier leur température, au moins deux circuits collecteurs séparés, un circuit collecteur dit « chaud » et un circuit collecteur dit « froid », dans chacun desquels circule un fluide caloporteur distinct agencé pour collecter respectivement les calories et les frigories émises par lesdits éléments thermiques selon leur cycle de fonctionnement, et des moyens de raccordement desdits circuits collecteurs à des circuits extérieurs destinés à utiliser lesdites calories et frigories collectées.

### Technique antérieure :

Les nouveaux générateurs thermiques qui utilisent l'effet magnétocalorique de certains matériaux offrent une alternative écologique très intéressante aux générateurs classiques voués à disparaître dans le contexte du développement durable et de la réduction de l'effet de serre. Toutefois, pour être économiquement rentable et fournir un bon rendement énergétique, la conception de ce type de générateurs et de leurs moyens de récupération des calories et des frigories émises par ces matériaux est primordiale, compte tenu des temps de cycle très courts, des faibles gradients de température générés et de l'intensité magnétique limitée. L'énergie récupérée est étroitement liée à la masse de matériau magnétocalorique, à l'intensité du champ magnétique et au temps d'échange avec le fluide caloporteur. D'une manière connue, le facteur de transfert d'un échangeur thermique est lié à la surface d'échange par rapport au débit du fluide caloporteur en contact avec cette surface d'échange. De ce fait, plus la surface d'échange est grande, plus le coefficient de transfert est élevé.

Dans les générateurs connus, on utilise comme moyens de récupération, un circuit collecteur unique traversant les éléments thermiques, dans lequel circule un fluide caloporteur unique, qui alimente alternativement un circuit froid et un circuit chaud. Cette solution induit, par conséquent, une grande inertie thermique qui pénalise considérablement le rendement énergétique du générateur.

Le document FR-A-2 864 211 décrit un générateur thermique tel que décrit dans le préambule de la revendication 1. La demande de brevet français n° 05/08963 déposée par le titulaire de la présente demande propose une nouvelle conception de générateurs dans laquelle les éléments thermiques sont traversés par deux circuits collecteurs distincts, un circuit collecteur chaud et un circuit collecteur froid, dans chacun desquels circule un fluide caloporteur distinct. Chaque élément thermique se présente sous la forme d'un insert de forme prismatique constitué d'un empilage de plaques nervurées réalisées en matériau magnétocalorique, délimitant entre elles des passages pour la circulation du fluide caloporteur de manière à créer les deux circuits collecteurs séparés. Ces inserts thermiques sont montés dans une platine pourvue de logements adéquats et de conduits reliant les circuits collecteurs correspondants des différents inserts thermiques. Cette solution a l'avantage de supprimer l'inertie thermique du fluide caloporteur étant donné qu'il y a un fluide pour le circuit chaud et un fluide pour le circuit froid, et d'augmenter la surface d'échange donc le rendement calorifique du générateur. Toutefois, elle présente l'inconvénient d'être difficilement industrialisable, d'avoir un coût très élevé et une configuration non modulaire.

### Exposé de l'invention :

La présente invention vise à pallier ces inconvénients en proposant un générateur thermique magnétocalorique compact, polyvalent, à fort rendement énergétique, ayant un coefficient de transfert maximal, tout en étant facilement industrialisable à des coûts raisonnés et en ayant une configuration modulaire pour pouvoir répondre à une large gamme d'applications aussi bien industrielles que domestiques.

Dans ce but, l'invention concerne un générateur thermique du genre indiqué en préambule, **caractérisé en ce qu**'il comporte au moins un module thermique constitué d'une pluralité d'éléments thermiques, empilés et agencés pour délimiter entre eux des canaux de circulation du fluide caloporteur, ces canaux étant répartis en canaux chauds dans lesquels circule le fluide caloporteur du circuit collecteur chaud et en canaux froids dans lesquels circule le fluide caloporteur du circuit collecteur froid, les canaux chauds et froids étant alternés entre lesdits éléments thermiques, et en ce que lesdits éléments thermiques comportent des orifices d'entrée et de sortie de fluide qui communiquent entre eux de manière à répartir le débit du fluide caloporteur de chaque circuit collecteur chaud et froid respectivement dans les canaux chauds et froids correspondants.

Cette construction étagée permet de constituer des sous-ensembles thermiques, appelés des modules thermiques, pourvus de canaux parallèles, ces modules thermiques pouvant être connectés les uns aux autres en série et/ou en parallèle. Cette construction permet de faire varier le nombre d'éléments thermiques empilés par module thermique en fonction du débit de fluide souhaité, ainsi que le nombre de modules thermiques juxtaposés en fonction de la plage de température souhaitée, d'où une très grande modularité.

### Description sommaire des dessins :

La présente invention et ses avantages apparaîtront mieux dans la description suivante de plusieurs modes de réalisation donnés à titre d'exemple non limitatif, en référence aux dessins annexés, dans lesquels :
- la figure 1 est une vue éclatée d'un générateur thermique selon l'invention,
- les figures 2 et 3 sont des vues en perspective de deux exemples de configurations du générateur de la figure 1,
- la figure 4 est une vue en perspective d'un module thermique entrant dans la composition du générateur de la figure 1,
- la figure 5 est une vue de détail en coupe partielle d'une extrémité du générateur de la figure 1,
- la figure 6A est une vue de face du module thermique de la figure 4, la figure 6B est une vue agrandie en perspective du détail A de la figure 4 et la figure 6C est une vue en plan de la tranche de la figure 6B,
- la figure 7A est une vue partielle de deux éléments thermiques du module de la figure 4 montrant deux secteurs thermiques et les figures 7B et 7C sont des vues en coupe selon les lignes BB et CC d'un élément thermique de la figure 6A,
- la figure 8A est une vue en coupe axiale d'un secteur thermique et la figure 8B est une vue du détail D,
- la figure 9A est une vue en coupe axiale d'un secteur thermique pourvu d'un insert et la figure 9B est une vue du détail E,
- les figures 10A, 10B et 11A, 11B sont des vues de face et arrière de deux variantes de réalisation d'un élément thermique selon l'invention,
- les figures 12 et 13 sont des variantes de pièces magnétocaloriques,
- les figures 14 et 15 sont des variantes de pastilles magnétocaloriques,
- la figure 16A est une vue en perspective d'un secteur thermique selon une autre variante de réalisation et la figure 16B est une vue du détail F,
- la figure 17A est une vue en perspective d'une première variante de réalisation d'un module thermique selon l'invention et la figure 17B est une vue du détail G,
- la figure 18A est une vue en perspective d'une deuxième variante de réalisation d'un module thermique selon l'invention, la figure 18B est une vue d'un sous-ensemble de ce module et la figure 18C est une vue du détail H de la figure 18B,
- la figure 19A est une vue en perspective d'une troisième variante de réalisation d'un module thermique selon l'invention et la figure 19B est une vue du détail I.

### Illustrations de l'invention :

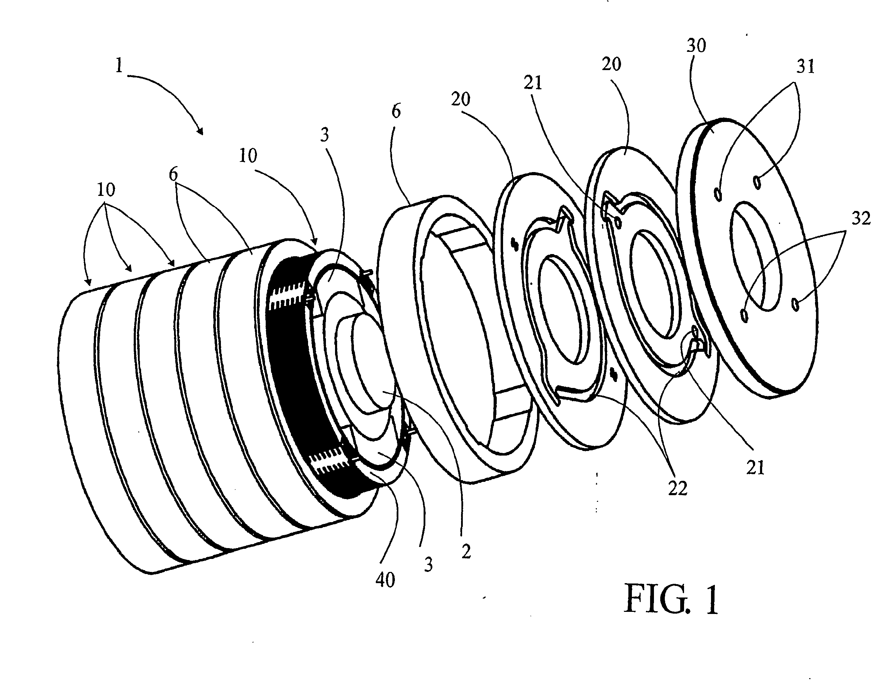

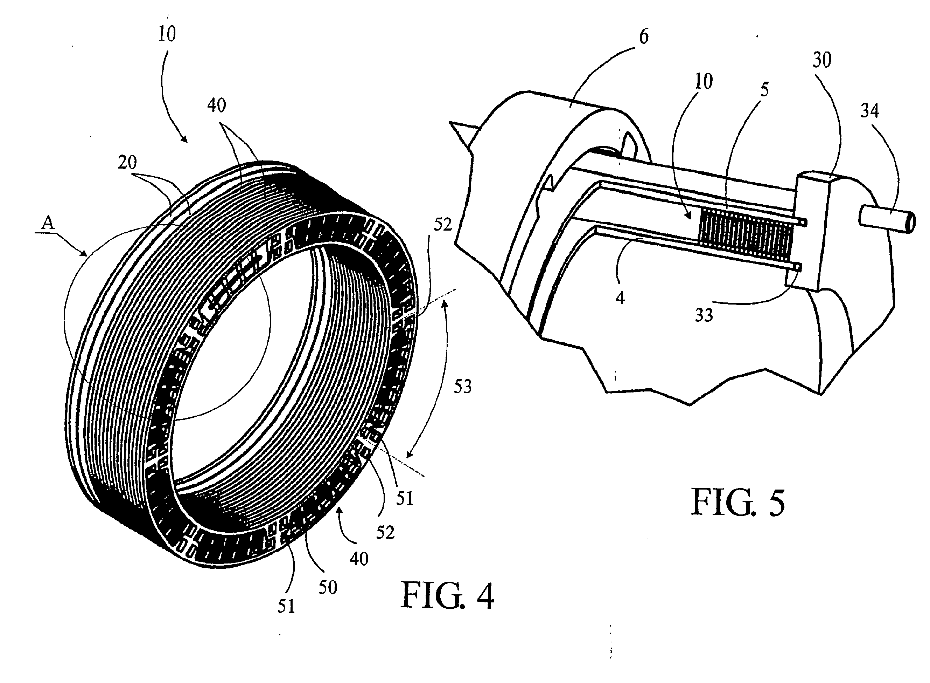

En référence à la figure 1, le générateur thermique 1 selon l'invention comporte un ensemble de six modules thermiques 10 empilés, raccordés par des disques répartiteurs 20 et obturés par des flasques de fermeture 30. Le nombre et la construction des modules thermiques 10 sont variables en fonction des performances recherchées. Le flasque de fermeture 30 représenté comporte quatre orifices 31, 32, dont deux orifices d'alimentation 31 et deux orifices d'évacuation 32, destinés à être raccordés à un circuit extérieur chaud et à un circuit extérieur froid (non représentés) qui utilisent respectivement les calories et les frigories produites par ce générateur 1. Selon les besoins, le raccordement peut s'effectuer d'un seul côté ou des deux côtés du générateur 1. Les disques répartiteurs 20 comportent des orifices 21 et des rainures de distribution 22 permettant de raccorder en série, en parallèle ou selon une combinaison série/parallèle, les circuits collecteurs chauds et froids des différents modules thermiques 10 entre eux et avec les circuits extérieurs chaud et froid. Ces disques répartiteurs 20 peuvent être doublés et dédiés chacun à un des circuits collecteurs comme sur les figures 1 et 4. Ils peuvent aussi être formés de disques simples à double face (non représentés) avec un agencement particulier d'orifices 21 et de rainures 22 de distribution pour réaliser la même fonction.

Dans l'exemple de la figure 1, ce générateur thermique 1 comporte un arbre 2 tournant et/ou se translatant axialement, portant deux assemblages magnétiques 3 diamétralement opposés, cet arbre étant entraîné par tout type d'actionneur connu (non représenté) selon un mouvement continu, discontinu, séquentiel ou alternatif. Le nombre, la position et le type d'assemblages magnétiques 3 sont modifiables et déterminés en fonction de la construction des modules thermiques 10. Ces assemblages magnétiques 3 peuvent être formés d'aimants permanents, d'électroaimants, de supraconducteurs ou tout autre type d'aimant. On choisira de préférence des aimants permanents pour leurs avantages en terme de dimensionnement, de simplicité d'utilisation et de faible coût. Ces aimants permanents peuvent être pleins, frittés, collés ou feuilletés, associés à un ou plusieurs matériaux magnétisables concentrant et dirigeant leurs lignes de champ magnétique. Les modules thermiques 10 peuvent être logés entre une chemise intérieure 4 et une chemise extérieure 5 (voir fig. 5), assurant une étanchéité complémentaire. Dans ce cas, les extrémités de ces chemises 4 et 5 sont couplées au flasque de fermeture 30 par des joints 33. La chemise intérieure 4 et/ou la chemise extérieure 5 peuvent être supprimées si la construction des modules thermiques 10 est telle qu'elle permet d'obtenir une étanchéité suffisante.

Les modules thermiques 10 peuvent être entourés d'une armature 6 réalisée de préférence dans un matériau ferromagnétique ayant pour fonction principale de refermer le flux magnétique généré par les assemblages magnétiques 3. Dans une variante de réalisation non représentée, le flux magnétique généré par les assemblages magnétiques 3 peut être refermé par des assemblages magnétiques complémentaires, mobiles ou statiques, situés en périphérie extérieure. Les modules thermiques 10 peuvent être assemblés selon un montage serré par tout moyen connu, comme par exemple des tirants 34 (voir fig. 5) s'étendant entre les deux flasques de fermeture 30, ou des brides de serrage (non représentées) montées sur l'arbre 2 au moyen de paliers. Tout autre mode d'assemblage peut être envisagé, l'essentiel étant d'assurer un maintien mécanique des modules thermiques 10 entre eux ainsi que l'étanchéité des circuits collecteurs chaud et froid internes au générateur.

Dans les différents exemples illustrés, le générateur thermique 1 présente une configuration circulaire, c'est-à-dire que les modules thermiques 10 sont annulaires et disposés autour d'un arbre 2 portant les assemblages magnétiques 3. L'invention s'étend également à un générateur thermique ayant une configuration rectiligne (non représenté) dans laquelle les éléments thermiques sont linéaires et empilés horizontalement, verticalement ou selon une combinaison horizontale et verticale, et les moyens magnétiques sont animés d'un mouvement de translation alternatif ou séquentiel.

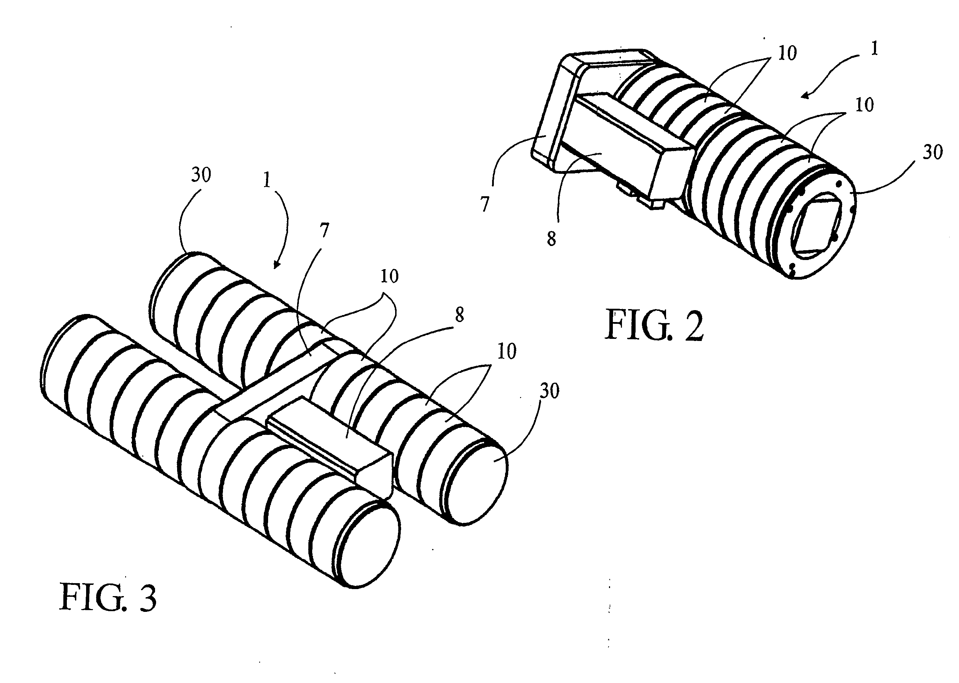

Les modules thermiques 10 peuvent être montés sur un socle 7 comme illustré à la figure 2 par tout moyen connu. Dans cet exemple, le générateur thermique 1 comporte deux ensembles de cinq modules thermiques 10 raccordés par des disques répartiteurs 20 (non visibles) et obturés par les flasques de fermeture 30. Le socle 7 porte un actionneur 8 disposé en parallèle et couplé à l'arbre 2 du générateur par tout type de transmission connue (non représentée). L'actionneur 8 peut être disposé en ligne et couplé directement à l'arbre 2. Dans la figure 3, le générateur thermique 1 comporte quatre ensembles de six modules thermiques 10 chacun, montés tête bêche sur un socle 7. Un actionneur 8 unique est couplé aux arbres 2 de chaque ensemble par tout type de transmission mécanique connue (non représentée). Ces exemples donnent un aperçu des différentes configurations possibles. De par sa construction modulaire, le générateur thermique 1 selon l'invention est configurable à l'infini en fonction de la puissance calorifique recherchée et du débit de fluide nécessaire pour chaque application envisagée. L'actionneur 8 peut être constitué par tout système générant un couple mécanique, par exemple une éolienne, une turbine hydraulique, un moteur thermique, un moteur électrique, un moteur à énergie animale ou musculaire, un vérin rotatif ou autre. Dans le cas d'un actionneur électrique, l'énergie peut provenir d'un capteur photoélectrique, d'un capteur solaire, d'une éolienne, du réseau, d'une génératrice ou autre.

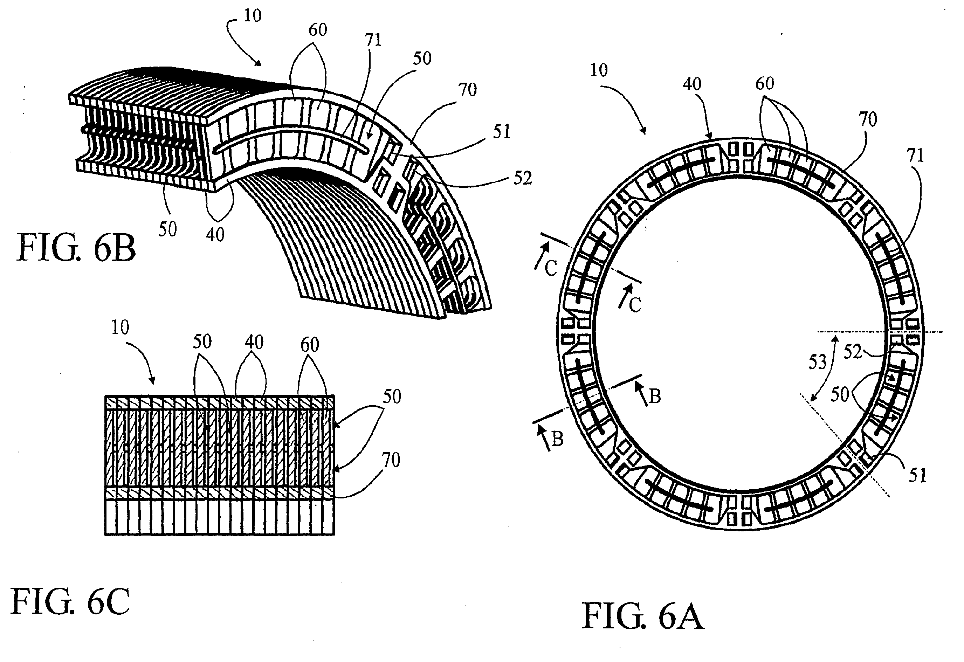

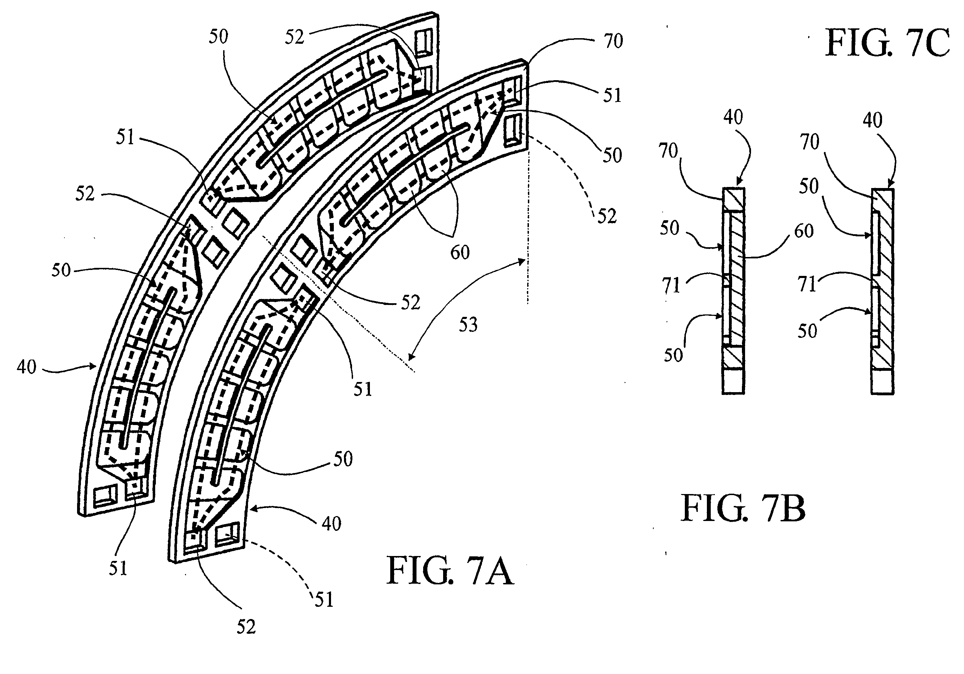

Chaque module thermique 10 est constitué d'un nombre N d'éléments thermiques 40 de géométrie identique ou complémentaire permettant de les empiler. Un exemple de module thermique 10 est illustré à la figure 4 et comporte dix sept éléments thermiques 40 en forme d'anneaux plans empilés axialement. Ces éléments thermiques 40 sont détaillés aux figures 6A- C et 7A- C et ont comme caractéristique de délimiter entre eux des canaux 50 pour la circulation d'un fluide caloporteur, à savoir des canaux dits chauds dans lesquels circule le fluide du circuit collecteur chaud et des canaux dits froids dans lesquels circule le fluide du circuit collecteur froid. Ces canaux 50 chauds et froids sont alternés entre les éléments thermiques 40 de sorte que chaque élément thermique 40 comporte d'un côté un canal 50 chaud et du côté opposé un canal 50 froid. Ces canaux 50 ont une faible épaisseur comprise par exemple entre 0,01 et 10 mm et de préférence entre 0,15 et 1,5 mm dans le but de générer un écoulement laminaire ou faiblement turbulent avec ou sans vortex du fluide, de sorte qu'entre deux éléments thermiques 40 adjacents circule une lame de fluide caloporteur chaud et entre les deux suivants une lame de fluide caloporteur froid. Ces éléments thermiques 40 comportent des orifices d'entrée 51 et des orifices de sortie 52 mettant en communication les canaux 50 d'un même circuit collecteur selon une configuration parallèle. Ces éléments thermiques 40 peuvent également être scindés en plusieurs secteurs thermiques 53 distincts, identiques ou non, chacun pourvu d'un canal 50, d'un orifice d'entrée 51 et d'un orifice de sortie 52, de manière à créer des circuits parallèles dans chaque lame de fluide. Ainsi, le débit du fluide caloporteur de chaque circuit collecteur est divisé une première fois par le nombre S/2 de secteurs thermiques 53 puis une seconde fois par le nombre N/2 d'éléments thermiques 40 empilés. Cette répartition étagée du débit du fluide caloporteur permet de réduire considérablement le débit et la vitesse de la lame de fluide dans chaque canal 50, augmentant ainsi le coefficient de transfert et réduisant simultanément les pertes de charge.

Dans une variante non représentée, des plaques d'entretoise peuvent être intercalées entre les éléments thermiques 40 pour délimiter les canaux 50 et assurer l'étanchéité comme par exemple des feuilles en Téflon^{®} ou similaire.

Dans l'exemple des figures 4, 6A- C et 7A- C, les éléments thermiques 40 du module thermique 10 sont scindés en huit secteurs thermiques 53, identiques, s'étendant sur environ 45°. La figure 7A montre le passage du fluide caloporteur dans des secteurs thermiques 53 de deux éléments thermiques 40 adjacents. Chaque secteur thermique 53 comporte quatre orifices, dont un orifice d'entrée 51 et un orifice de sortie 52 traversant et communiquant avec son canal 50 et dont un orifice d'entrée 51 et un orifice de sortie 52 traversant pour communiquer avec le canal 50 de l'élément thermique 40 suivant. Selon la position angulaire des assemblages magnétiques 3 par rapport au module thermique 10, le fluide caloporteur circulant dans les canaux 50 des différents secteurs thermiques 53 est actif ou passif. Dans les secteurs thermiques 53 soumis au champ magnétique, le fluide caloporteur du circuit collecteur chaud est actif et, dans les autres secteurs thermiques 53 non soumis au champ magnétique, le fluide caloporteur du circuit collecteur froid est actif. Parallèlement, le fluide caloporteur des circuits collecteurs froid et chaud dans ces mêmes secteurs sont passifs.

Dans cet exemple, chaque élément thermique 40 comporte une pluralité de pastilles 60 thermiquement conductrices portées par une pièce de support 70, la surface occupée par les pastilles 60 étant majoritaire par rapport à celle de la pièce de support 70. Les pastilles 60 sont en forme de secteur circulaire et par exemple réalisées en plaque de matériau magnétocalorique découpée, usinée ou moulée. On entend par « matériau magnétocalorique » un matériau réalisé en partie et en totalité dans une matière magnétocalorique, telle que par exemple du gadolinium (Gd), un alliage de gadolinium contenant par exemple du silicium (Si), du germanium (Ge), un alliage de manganèse contenant par exemple du fer (Fe), du magnésium (Mg), du phosphore (P), un alliage de lanthane, un alliage de nickel (Ni), tout autre matériau ou alliage magnétisable équivalent, ou d'une combinaison de différents matériaux magnétocaloriques, se présentant sous forme de poudre, de particules, de bloc plein ou poreux, d'un assemblages de plaques rainurées superposées formant des mini ou micro-canaux. Le choix entre ces matériaux magnétocaloriques se fait en fonction des puissances caloriques et frigorifiques recherchées et des plages de température nécessaires.

La pièce de support 70 peut être souple ou rigide et réalisée en matières naturelles ou synthétiques, chargées ou non, comme par exemple les thermoplastiques, les élastomères, les résines ou toute autre matière thermiquement isolante. Elle peut être obtenue par usinage, impression en 3D par stéréo lithographie, gravure, moulage, injection ou similaire. De préférence, elle est surmoulée autour des pastilles 60 dont les faces avant et arrière restent apparentes. Cette pièce de support 70 est agencée pour combiner plusieurs fonctions : une fonction de maintien des pastilles 60, une fonction d'entretoise entre les éléments thermiques 40 empilés pour garantir l'épaisseur des canaux 50, une fonction d'étanchéité entre lesdits éléments thermiques 40 lorsqu'ils sont empilés et au besoin une fonction d'indexage et/ou d'emboîtement pour faciliter le montage et le positionnement des éléments thermiques 40 entre eux.
Dans une variante non représentée, la pièce de support 70 peut être chargée avec des particules ou des fibres en matière magnétocalorique pour y ajouter une fonction thermique.

L'élément thermique 40 de forme annulaire est représenté en détail à la figure 7A et en coupe aux figures 7B et 7C. Il présente une section sensiblement rectangulaire et comporte en face avant des zones en creux formant le canal 50 pour la circulation d'un premier fluide caloporteur et en face arrière une zone plane fermant le canal 50 de l'élément thermique 40 suivant pour la circulation du second fluide caloporteur. Dans ce cas, le canal 50 est délimité au fond par la face avant des pastilles 60 et sur les côtés par les bords de la pièce de support 70. La face arrière plane de l'élément thermique 40 est délimitée par la face arrière des pastilles 60 et la pièce de support 70. La pièce de support 70 peut comporter en face avant une ou plusieurs nervures centrales 71 discontinues ou continues qui séparent le canal 50 en au moins deux parties pour améliorer la répartition du fluide sur toute la surface des pastilles 60. Selon une autre variante de réalisation non représentée, la pièce de support 70 peut comporter des zones en creux formant les canaux 50 pour la circulation des fluides caloporteurs chaud et froid sur ses faces avant et arrière. Les faces avant et arrière de la pièce de support 70 forment des plans de joint assurant l'étanchéité des canaux 50 lorsque les éléments thermiques 40 sont empilés selon un montage serré. Bien entendu, toute autre forme remplissant les mêmes fonctions peut convenir. Il est également possible de varier l'épaisseur dans certaines zones de la pièce de support 70 et/ou l'épaisseur des pastilles 60 pour jouer sur l'épaisseur de la lame de fluide et par conséquent sur sa vitesse d'écoulement.

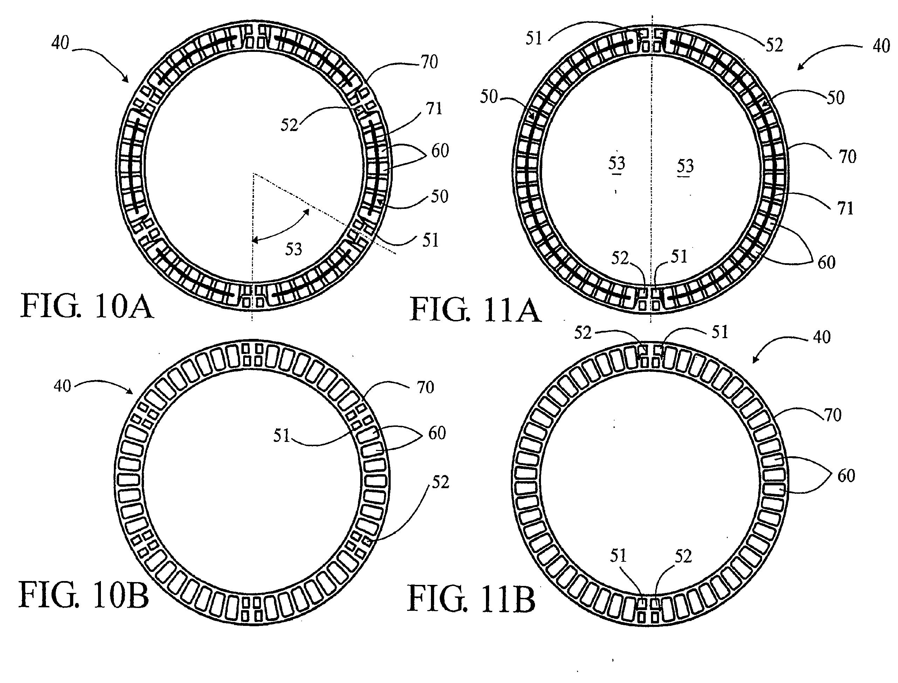

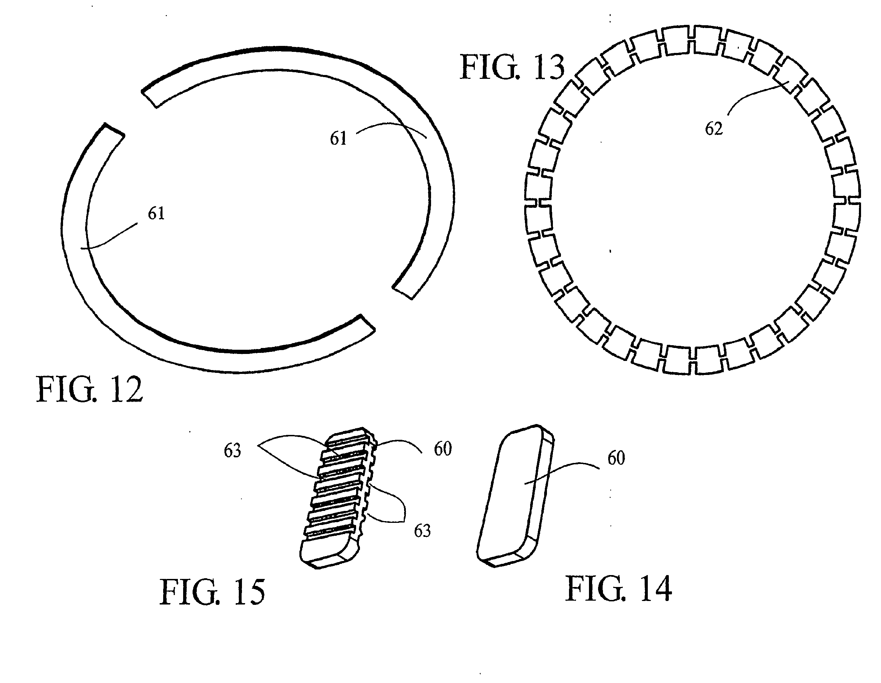

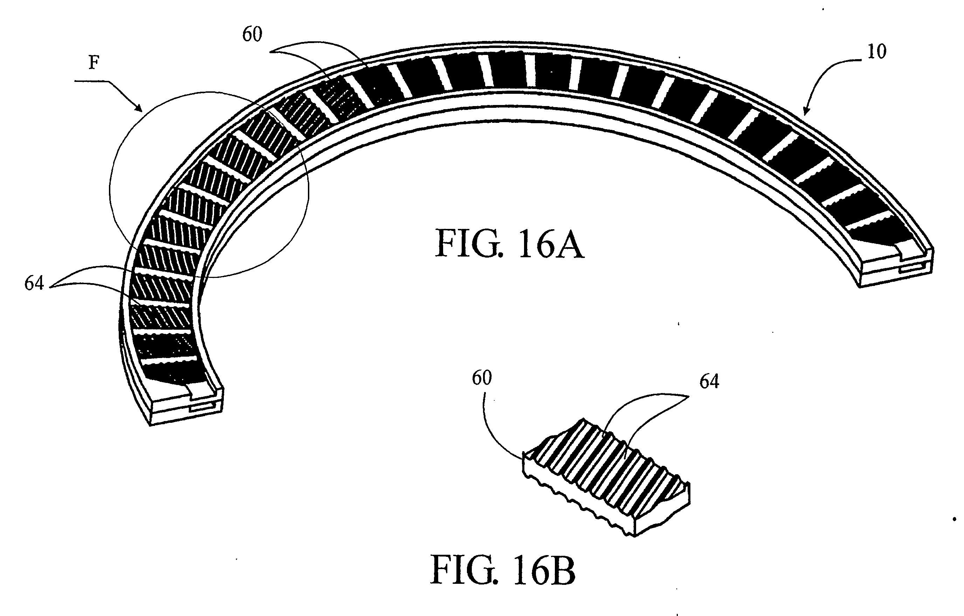

Les éléments thermiques 40 peuvent avoir d'autres configurations. Les figures 10A et 10B illustrent l'élément thermique 40 respectivement en vues de face et arrière qui comporte six secteurs thermiques 53 distincts, identiques s'étendant sur environ 60°, chacun composé de pastilles 60. Dans les figures 11A et 11B, l'élément thermique 40 ne comporte que deux secteurs thermiques 53 distincts, identiques s'étendant sur environ 180°, chacun composé de pastilles 60. Ces pastilles 60 en forme de secteur circulaire peuvent avoir des formes géométriques différentes ou quelconques. Elles peuvent aussi être remplacées par des lames 61 comme dans l'exemple de la figure 12, ces lames 61 pouvant être utilisées dans l'élément thermique 40 à deux secteurs thermiques 53 comme celui des figures 11. Les pastilles 60 peuvent encore être remplacées par un anneau 62 fendu pour former des pastilles reliées entre elles, ou toute autre forme équivalente. De même, ces différentes pièces en matériau magnétocalorique 60, 61, 62 peuvent avoir des surfaces planes favorisant un écoulement de fluide sans perturbation comme la pastille 60 de la figure 14 ou au contraire avoir sur au moins une des surfaces, des reliefs formant des rainures 63 ou similaire pour augmenter la surface d'échange avec le fluide caloporteur comme la pastille 60 de la figure 15. Selon la forme et l'orientation de ces rainures 63 par rapport à l'écoulement du fluide, il est possible de créer des perturbations pour augmenter le coefficient de transfert. L'élément thermique 40 illustré à la figure 16A comporte des pastilles 60 pourvues de rainures obliques 64 sur ses deux faces dont le détail est donné à la figure 16B. Ces rainures obliques 64 créent dans la lame de fluide des tourbillons communément appelés des vortex.

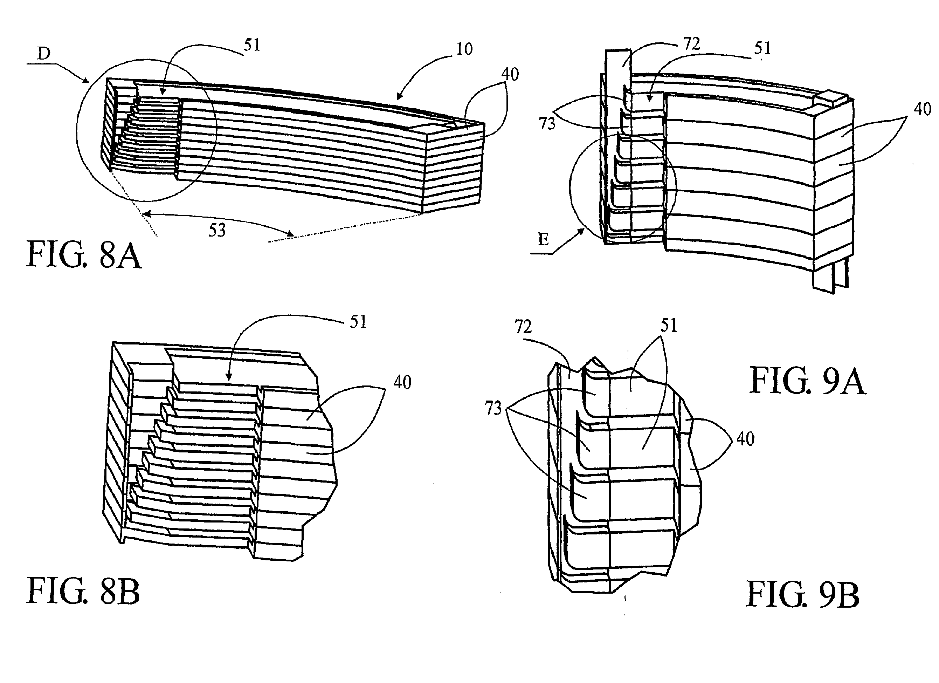

Dans un même module thermique 10, les orifices d'entrée 51 et les orifices de sortie 52 des canaux 50 d'un même circuit collecteur sont alimentés en parallèle. Pour uniformiser la répartition du fluide caloporteur dans ces différents canaux 50, au moins les orifices d'entrée 51 doivent avoir de manière préférentielle une section décroissante dans le sens de l'écoulement du fluide. Cette construction est représentée dans les figures 8A et 8B et permet qu'une même quantité de fluide circule à une même vitesse d'écoulement dans chacun des canaux 50, pour obtenir un même coefficient de transfert et réduire ainsi les pertes de charges. Toutefois, cette construction impose une forme différente pour chaque élément thermique 40. Une autre solution consiste à créer un insert 72 pourvu d'orifices 73 à section décroissante, cet insert 72 étant logé à l'intérieur des orifices d'entrée 51 de même section des éléments thermiques 40, conformément à l'exemple illustré dans les figures 9A et 9B. Cette solution simplifie considérablement la réalisation industrielle d'une telle construction. De plus, l'insert 72 permet d'aligner les éléments thermiques 40 entre eux et d'empêcher toute rotation. Bien entendu, ces exemples peuvent s'appliquer aux orifices de sortie 52 ayant dans ce cas une section croissante dans le sens de l'écoulement du fluide.

Dans une variante non représentée, les éléments thermiques 40 d'un même module thermique 10 peuvent être décalés angulairement l'un par rapport à l'autre de sorte que les orifices d'entrée 51 et de sortie 52 sont alignés, non pas dans l'axe, mais sur une trajectoire hélicoïdale, facilitant l'entrée et la sortie du fluide caloporteur dans les canaux 50.

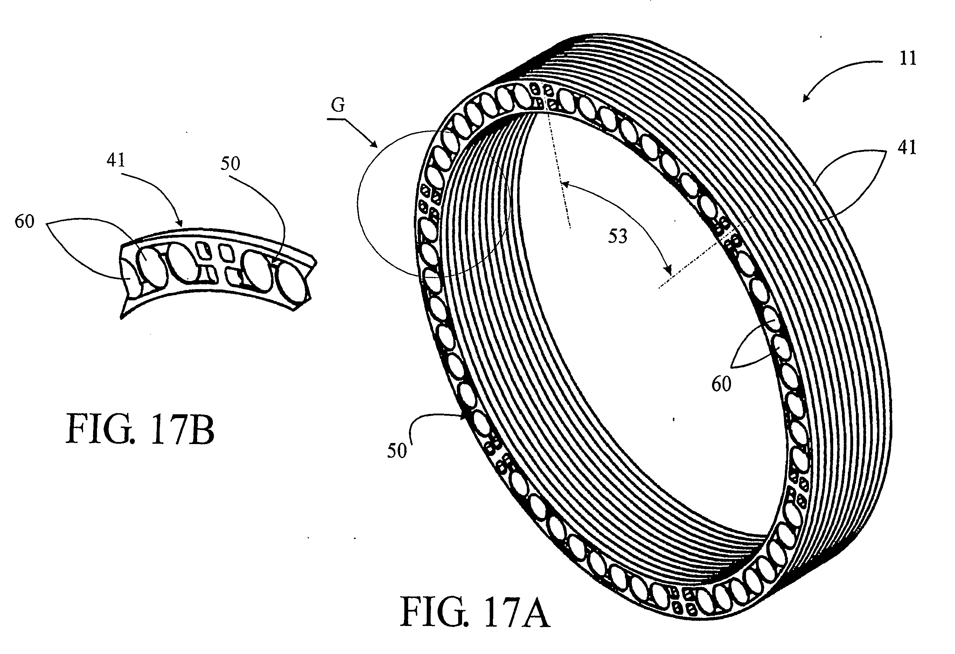

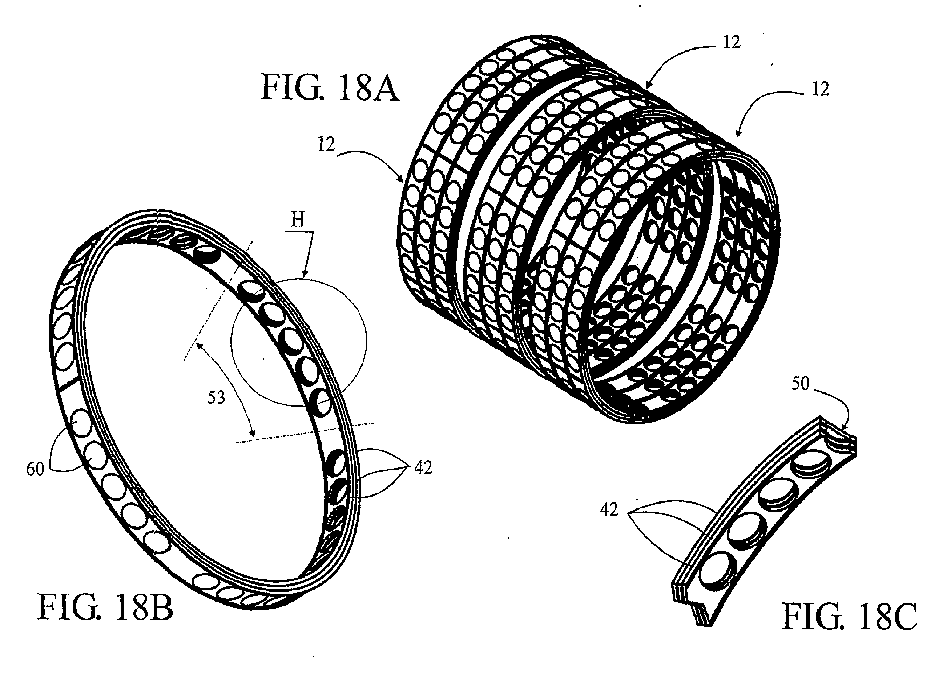

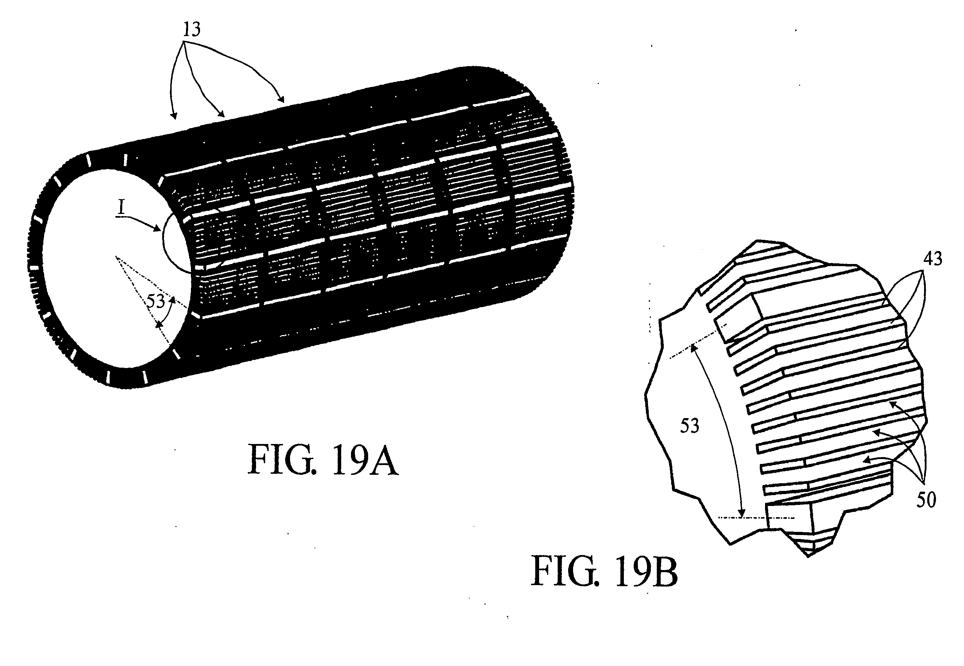

Les modules thermiques 10 peuvent avoir également d'autres constructions. Le module thermique 11 illustré aux figures 17A et 17B comporte N éléments thermiques 41 en forme d'anneaux plans empilés axialement. Chaque élément thermique 41 comporte des pastilles 60 rondes en matériau magnétocalorique réparties en six secteurs thermiques 53, le canal 50 circulant en zigzag sur ces pastilles 60. La figure 18A illustre un assemblage de trois modules thermiques 12, chacun formé de trois sous-ensembles identiques, assemblés axialement. Un des sous-ensembles est illustré à la figure 18B et comporte trois éléments thermiques 42 sous la forme de bagues concentriques, empilées radialement, délimitant entre elles les canaux 50. Chaque élément thermique 42 comporte des pastilles 60 rondes en matériau magnétocalorique réparties en six secteurs thermiques 53. Cette variante de réalisation permet d'illustrer la combinaison d'un empilement radial avec un empilement axial. La figure 19A comporte un assemblage de six modules thermiques 13 identiques assemblés axialement. Chaque module thermique 13 comporte quatorze sous-ensembles identiques, en forme de secteur circulaire et assemblés côte à côte pour créer un tube cylindrique. Un sous-ensemble est détaillé à la figure 19B et comporte huit éléments thermiques 43 sous forme de lames superposées, délimitant entre eux les canaux 50, chaque élément thermique 43 pouvant être réalisé totalement ou en partie dans un matériau magnétocalorique.

Ces exemples ne sont pas limitatifs et ont pour but d'illustrer les variétés de constructions possibles des modules thermiques 10-13 permettant de réaliser une gamme infinie de générateurs thermiques magnétocaloriques selon l'invention.

De même, la composition chimique du fluide caloporteur est adaptée à la plage de température voulue et choisie pour obtenir un échange thermique maximal. Il peut être liquide, gazeux ou diphasique. S'il est liquide, on utilisera par exemple de l'eau pure pour des températures positives et de l'eau additionnée d'antigel, par exemple un produit glycolé, pour des températures négatives. Ce générateur thermique 1 permet ainsi de s'affranchir de l'utilisation de tout fluide corrosif ou nocif pour l'homme et/ou son environnement.

### Possibilités d'application industrielle :

Toutes les pièces qui composent le générateur thermique 1 selon l'invention peuvent être réalisées en série selon des processus industriels reproductibles. La conception modulaire et compacte de ce générateur thermique 1 permet de réaliser des éléments thermiques 40-43 et des modules thermiques 10-13 standard qui peuvent être combinés, assemblés et raccordés en série, en parallèle ou selon une combinaison série/parallèle en fonction de la plage de température souhaitée et du débit du fluide pour une application donnée. Cette conception permet de répondre à une large gamme d'applications aussi bien industrielles que domestiques, à des coûts compétitifs, dans un faible encombrement, en offrant des performances non égalées à ce jour avec ce type de générateurs.

En effet, la structure étagée du générateur thermique 1 permet de diviser plusieurs fois le débit du fluide caloporteur de chaque circuit collecteur. Cette répartition étagée du fluide caloporteur permet de diviser avec le même coefficient le débit du fluide dans chaque canal 50, de réduire la vitesse d'écoulement du fluide, de réduire les pertes de charges et d'augmenter le coefficient d'échange. Ce coefficient d'échange est d'autant plus grand que la surface d'échange constituée par la multiplicité des canaux 50 est grande. Par ailleurs, la conception des éléments thermiques 10-13 permet de réduire considérablement la masse de matière inerte de la pièce de support 70 par rapport à la masse de matériau magnétocalorique, ce qui améliore encore le rendement thermique du générateur 1 pour un même encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique (1) magnétocalorique comportant des éléments thermiques (40-43) à matériau magnétocalorique, des moyens magnétiques (3) agencés pour créer une variation de champ magnétique dans lesdits éléments thermiques et faire varier leur température, au moins deux circuits collecteurs séparés, un circuit collecteur dit « chaud » et un circuit collecteur dit « froid », dans chacun desquels circule un fluide caloporteur distinct agencé pour collecter respectivement les calories ou les frigories émises par lesdits éléments thermiques selon leur cycle de fonctionnement, et des moyens de raccordement des circuits collecteurs à des circuits extérieurs destinés à utiliser lesdites calories et frigories collectées, **caractérisé en ce que** ledit générateur comporte au moins un module thermique (10-13) constitué d'une pluralité d'éléments thermiques (40-43), empilés et agencés pour délimiter entre eux des canaux (50) de circulation du fluide caloporteur, ces canaux étant répartis en canaux chauds dans lesquels circule le fluide caloporteur du circuit collecteur chaud et en canaux froids dans lesquels circule le fluide caloporteur du circuit collecteur froid, les canaux chauds et froids étant alternés entre lesdits éléments thermiques, et **en ce que** lesdits éléments thermiques (40-43) comportent des orifices d'entrée (51) et de sortie (52) de fluide qui communiquent entre eux de manière à répartir le débit du fluide caloporteur de chaque circuit collecteur chaud et froid respectivement dans les canaux (50) chauds et froids correspondants.

2. Générateur thermique selon la revendication 1, **caractérisé en ce que** lesdits canaux (50) de circulation ont une épaisseur comprise entre 0,01 et 10 mm et de préférence entre 0,15 et 1, 5 mm.

3. Générateur thermique selon la revendication 1, **caractérisé en ce que** lesdits éléments thermiques (40-43) comportent des formes en creux pour délimiter lesdits canaux (50).

4. Générateur thermique selon la revendication 1, **caractérisé en ce que** ledit module thermique (10-13) comporte des plaques d'entretoise intercalées entre lesdits éléments thermiques (40-43) pour délimiter lesdits canaux (50).

5. Générateur thermique selon la revendication 1, **caractérisé en ce que** lesdits orifices d'entrée (51) des éléments thermiques (40-43) ont une section décroissante dans le sens de l'écoulement dudit fluide caloporteur pour le répartir uniformément dans lesdits canaux (50) concernés.

6. Générateur thermique selon la revendication 1, **caractérisé en ce que** lesdits orifices de sortie (52) des éléments thermiques (40-43) ont une section croissante dans le sens de l'écoulement dudit fluide caloporteur pour le regrouper avant de sortir dudit module thermique.

7. Générateur thermique selon la revendication 5 ou 6, **caractérisé en ce que** lesdits orifices d'entrée (51) ou de sortie (52) à section variable sont prévus dans un insert (72) logé à travers lesdits éléments thermiques (40-43).

8. Générateur thermique selon l'une quelconque des revendications précédentes, **caractérisé en ce que** lesdits éléments thermiques (40-43) sont décalés l'un par rapport à l'autre de sorte que les orifices d'entrée (51) et de sortie (52) sont alignés sur une trajectoire hélicoïdale.

9. Générateur thermique selon la revendication 1, **caractérisé en ce que** ledit module thermique a une configuration rectiligne et lesdits éléments thermiques sont linéaires et empilés horizontalement, verticalement ou selon une combinaison horizontale et verticale.

10. Générateur thermique selon la revendication 1, **caractérisé en ce que** ledit module thermique (10-14) a une configuration circulaire et lesdits éléments thermiques (40-43) sont annulaires et empilés axialement, radialement ou selon une combinaison axiale et radiale.

11. Générateur thermique selon la revendication 1, **caractérisé en ce que** lesdits éléments thermiques (43) sont formés de pièces en matériau magnétocalorique.

12. Générateur thermique selon la revendication 1, **caractérisé en ce que** lesdits éléments thermiques (40-42) comportent une ou plusieurs pièces (60-62) en matériau magnétocalorique portées par une pièce de support (70).

13. Générateur thermique selon la revendication 12, **caractérisé en ce que** ladite pièce de support (70) est surmoulée autour desdites pièces (60-62) en matériau magnétocalorique.

14. Générateur thermique selon la revendication 12, **caractérisé en ce que** ladite pièce de support (70) est réalisée dans une matière thermiquement isolante.

15. Générateur thermique selon la revendication 14, **caractérisé en ce que** ladite matière thermiquement isolante est chargée en particules de matière thermiquement conductrice.

16. Générateur thermique selon la revendication 12, **caractérisé en ce que** lesdites pièces (60) en matériau magnétocalorique sont des pastilles de forme géométrique ou en secteur circulaire.

17. Générateur thermique selon la revendication 11 ou 12, **caractérisé en ce que** lesdites pièces (60-62) en matériau magnétocalorique ont des surfaces lisses.

18. Générateur thermique selon la revendication 11 ou 12, **caractérisé en ce que** lesdites pièces (60-62) magnétocaloriques comportent des reliefs sur au moins une de leurs faces.

19. Générateur thermique selon la revendication 18, **caractérisé en ce qu'**au moins une desdites faces comporte des rainures (63, 64) agencées pour créer des tourbillons dans le fluide caloporteur.

20. Générateur thermique selon la revendication 1, **caractérisé en ce que** lesdits éléments thermiques (40-43) sont scindés en au moins deux secteurs thermiques (53) distincts, comportant chacun un canal (50) alimenté par un orifice d'entrée (51) et un orifice de sortie (52).

21. Générateur thermique selon la revendication 20, **caractérisé en ce que** les orifices d'entrée. (51) et de sortie (52) des secteurs thermiques (53) d'un même élément thermique (40-43) sont raccordés en série, en parallèle ou selon une combinaison série/parallèle au circuit collecteur chaud ou froid qui lui correspond.

22. Générateur thermique selon l'une quelconque des revendications précédentes, **caractérisé en ce qu'**il comporte au moins deux modules thermiques (10-13) et **en ce que** lesdits circuits collecteurs chauds et froids desdits modules thermiques sont raccordés en série, en parallèle ou selon une combinaison série/parallèle par des disques répartiteurs (20).

23. Générateur thermique selon l'une quelconque des revendications précédentes,
**caractérisé en ce qu'**il comporte des flasques de fermeture (30) agencés pour fermer lesdits canaux (50) desdits éléments thermiques (40-43) d'extrémité et pour maintenir mécaniquement lesdits éléments thermiques (40-43) entre eux, ces flasques de fermeture (30) comportant des orifices d'alimentation (31) et d'évacuation (32) pour raccorder lesdits circuits collecteurs chaud et froid auxdits circuits extérieurs.

24. Générateur thermique selon la revendication 10, **caractérisé en ce qu'**il comporte une chemise intérieure (4) et/ou une chemise extérieure (5) agencée pour étancher lesdits modules thermiques (10-13).

25. Générateur thermique selon la revendication 10, **caractérisé en ce qu'**il comporte des assemblages magnétiques (3) intérieurs portés par un arbre (2) entraîné en rotation et/ou en translation et une armature (6) extérieure agencée pour refermer le flux magnétique généré par lesdits assemblages magnétiques (3). -

26. Générateur thermique selon la revendication 10, **caractérisé en ce qu'**il comporte des assemblages magnétiques (3) intérieurs et extérieurs, au moins un des assemblages magnétiques (3) étant porté par un arbre (2) entraîné en rotation et/ou en translation.

27. Générateur thermique selon la revendication 1, **caractérisé en ce que** ledit fluide caloporteur est liquide, gazeux ou diphasique.

## Claims

1. Magneto-calorific thermal generator (1) comprising thermal elements (40-43) based on magneto-calorific material, magnetic means (3) arranged to create a variation in the magnetic field in the said thermal elements and make their temperature vary, at least two separate collector circuits, a "hot" circuit and a "cold" circuit, in each of which circulates a separate heat transfer fluid arranged to collect respectively the calories or frigories emitted by the said thermal elements according to their functional cycle, and means of connecting the collector circuits to external circuits destined to use the said calories and frigories collected, **characterised in that** the said generator comprises at least one thermal module (10-13) constituted from many thermal elements (40-43) stacked and arranged to delimit between them channels (50) for the circulation of the heat transfer fluid, these channels being divided into hot channels in which circulates the heat transfer fluid of the hot collector circuit and cold channels in which circulates the heat transfer fluid of the cold collector circuit, these hot and cold channels being alternated between the said thermal elements, and **in that** the said thermal elements (40-43) have inlet orifices (51) and outlet orifices (52) for fluid which communicate with each other so as to distribute the flow of heat transfer fluid in each hot and cold collector circuit respectively into the corresponding hot and cold channels (50).

2. Thermal generator 1 according to Claim 1, **characterised in that** the said circulation channels (50) have a thickness ranging from 0.01 mm to 10 mm and preferably between 0.15 and 1.5 mm

3. Thermal generator 1 according to Claim 1, **characterised in that** the said thermal elements (40-43) have recessed shapes to delimit the said channels (50).

4. Thermal generator 1 according to Claim 1, **characterised in that** the said thermal module (10-13) has spacer plates inserted between the said thermal elements (40-43) to delimit the said channels (50).

5. Thermal generator according to Claim 1, **characterised in that** the said inlet orifices (51) of the thermal elements (40-43) have a decreasing cross section in the direction of flow of the heat transfer fluid in order to distribute it evenly in the said channels (50) concerned.

6. Thermal generator 1 according to Claim 1, **characterised in that** the said outlet orifices (52) of the thermal elements (40-43) have an increasing cross section in the direction of flow of the heat transfer fluid in order to gather it together before leaving the said thermal module.

7. Thermal generator according to Claim 5 or Claim 6, **characterised in that** the said inlet orifices (51) and outlet orifices (52) with variable cross section are located in an insert (72) positioned across the said thermal elements (40-43).

8. Thermal generator according to any one of the preceding Claims, **characterised in that** the said thermal elements (40-43) are offset relative to each other such that the inlet orifices (51) and outlet orifices (52) are aligned in a helical path.

9. Thermal generator according to Claim 1, **characterised in that** the said thermal module has a rectilinear configuration and the said thermal elements are linear and stacked horizontally, vertically or in a horizontal and vertical combination.

10. Thermal generator according to Claim 1, **characterised in that** the said thermal module (10-14) has a circular configuration and the said thermal elements (40-43) are annular and stacked axially, radially or in an axial and radial combination.

11. Thermal generator according to Claim 1, **characterised in that** the said thermal elements (43) are formed from parts in magneto-calorific material.

12. Thermal generator according to Claim 1, **characterised in that** the said thermal elements (40-42) comprise one or more parts (60-62) in magneto-calorific material carried by a support (70).

13. Thermal generator according to Claim 12, **characterised in that** the said support (70) is overmoulded around the said parts (60-62) in magneto-calorific material.

14. Thermal generator according to Claim 12, **characterised in that** the said support (70) is made from a thermally insulating material.

15. Thermal generator according to Claim 14, **characterised in that** the said thermally insulating material is filled with particles of thermally conducting material.

16. Thermal generator according to Claim 12, **characterised in that** the said parts (60) in magneto-calorific material are inserts of geometrical shape or the shape of a sector of a circle.

17. Thermal generator according to Claim 11 or Claim 12, **characterised in that** the said parts (60-62) in magneto-calorific material have smooth surfaces.

18. Thermal generator according to Claim 11 or Claim 12, **characterised in that** the said parts (60-62) in magneto-calorific material have relief features on at least one of their faces.

19. Thermal generator according to Claim 18, **characterised in that** at least one of the said faces has grooves (63, 64) arranged to create swirls in the heat transfer fluid.

20. Thermal generator according to Claim 1, **characterised in that** the said thermal elements (40-43) are divided into at least two separate thermal sectors (53), each having a channel (50) fed by an inlet orifice (51) and an outlet orifice (52).

21. Thermal generator according to Claim 20, **characterised in that** the inlet orifices (51) and outlet orifices (52) of the thermal sectors (53) of a given thermal element (40-43) are connected in series, in parallel, or in a series/parallel combination, to the hot or cold collector circuit corresponding to it.

22. Thermal generator according to any one of the preceding Claims, **characterised in that** it comprises at least two thermal modules (10-13) and **in that** the said hot and cold collector circuits of the said thermal modules are connected in series, in parallel or in series/parallel combination by distributor discs (20).

23. Thermal generator according to any one of the preceding Claims, **characterised in that** it comprises sealing flanges (30) arranged to close the said channels (50) of the said terminal thermal elements (40-43) and to mechanically maintain the said thermal elements (40-43) together, these sealing flanges (30) having feed orifices (31) and discharge orifices (32) to connect the said hot and cold collector circuits to the said external circuits.

24. Thermal generator according to Claim 10, **characterised in that** it comprises an inner sleeve (4) and/or an outer sleeve (5) arranged to seal the said thermal modules (10-13).

25. Thermal generator according to Claim 10, **characterised in that** it comprises internal magnetic assemblies (3) carried by a shaft (2) driven in rotation and/or translation and an outer armature (6) arranged to close the magnetic flux generated by the said magnetic assemblies (3).

26. Thermal generator according to Claim 10, **characterised in that** it comprises internal and external magnetic assemblies (3), at least one of these magnetic assemblies (3) being carried by a shaft (2) driven in rotation and/or translation.

27. Thermal generator according to Claim 1, **characterised in that** the said heat transfer fluid is liquid, gaseous or diphasic.

## Patentansprüche

1. Magnetokalorischer Thermogenerator (1), der Thermoelemente (40-43) aus magnetokalorischem Werkstoff, Magneteinrichtungen (3), die angeordnet sind, um eine Magnetfeldschwankung in den Thermoelementen zu erzeugen und ihre Temperatur zu verändern, mindestens zwei getrennte Sammelkreisläufe, einen sogenannten "warmen" Sammelkreislauf und einen sogenannten "kalten" Sammelkreislauf, wobei in jedem davon ein anderes Wärmeübertragungsfluid zirkuliert, welches angeordnet ist, um die jeweils von den Thermoelementen entsprechend ihres Funktionszyklus abgegebenen Wärme- oder Kälteeinheiten zu sammeln, und Einrichtungen zur Verbindung der Sammelkreisläufe mit externen Kreisläufen aufweist, die zur Verwendung der gesammelten Wärme- und Kälteeinheiten bestimmt sind, **dadurch gekennzeichnet, dass** der Generator mindestens ein Thermomodul (10-13) aufweist, welches aus einer Mehrzahl gestapelter Thermoelemente (40-43) besteht, die angeordnet sind, um zwischen sich Kanäle (50) für die Zirkulation des Wärmeübertragungsfluids zu begrenzen, wobei die Kanäle in warme Kanäle, in welchen das Wärmeübertragungsfluid des warmen Sammelkreislaufs zirkuliert, und in kalte Kanäle unterteilt sind, in welchen das Wärmeübertragungsfluid des kalten Sammelkreislaufs zirkuliert, wobei die warmen und kalten Kanäle zwischen den Thermoelementen abwechseln, und wobei die Thermoelemente (40-43) Eintritts-(51) und Austrittsöffnungen (52) für Fluid aufweisen, die untereinander derart in Verbindung stehen, dass der Durchsatz des Wärmeübertragungsfluids von jedem warmen und kalten Sammelkreislauf jeweils in die entsprechenden warmen und kalten Kanäle (50) aufgeteilt wird.

2. Thermogenerator nach Anspruch 1, **dadurch gekennzeichnet, dass** die Kanäle (50) für die Zirkulation eine Dicke zwischen einschließlich 0,01 und 10 mm, und vorzugsweise zwischen 0,15 und 1,5 mm aufweisen.

3. Thermogenerator nach Anspruch 1, **dadurch gekennzeichnet, dass** die Thermoelemente (40-43) Hohlformen aufweisen, um die Kanäle (50) zu begrenzen.

4. Thermogenerator nach Anspruch 1, **dadurch gekennzeichnet, dass** das Thermomodul (10-13) Querverstrebungsplatten aufweist, die zwischen den Thermoelementen (40-43) eingeschoben sind, um die Kanäle (50) zu begrenzen.

5. Thermogenerator nach Anspruch 1, **dadurch gekennzeichnet, dass** die Eintrittsöffnungen (51) der Thermoelemente (40-43) einen Querschnitt aufweisen, der in Abflussrichtung des Wärmeübertragungsfluids abnimmt, um es gleichmäßig auf die betroffenen Kanäle (50) aufzuteilen.

6. Thermogenerator nach Anspruch 1, **dadurch gekennzeichnet, dass** die Austrittsöffnungen (52) der Thermoelemente (40-43) einen Querschnitt aufweisen, der in Abflussrichtung des Wärmeübertragungsfluids zunimmt, um es vor dem Austritt aus dem Thermomodul umzuschichten.

7. Thermogenerator nach Anspruch 5 oder 6, **dadurch gekennzeichnet, dass** die Eintritts- (51) oder Austrittsöffnungen (52) mit veränderbarem Querschnitt in einem Einsatz (72) vorgesehen sind, der über den verschiedenen Thermoelementen (40-43) positioniert ist.

8. Thermogenerator nach einem der vorangegangenen Ansprüche, **dadurch gekennzeichnet, dass** die Thermoelemente (40-43) im Verhältnis zueinander derart versetzt sind, dass die Eintritts- (51) und Austrittsöffnungen (52) auf einer spiralförmigen Bahn ausgerichtet sind.

9. Thermogenerator nach Anspruch 1, **dadurch gekennzeichnet, dass** das Thermomodul eine geradlinige Konfiguration aufweist und die Thermoelemente linear sind und horizontal, vertikal oder gemäß einer horizontalen und vertikalen Kombination gestapelt sind.

10. Thermogenerator nach Anspruch 1, **dadurch gekennzeichnet, dass** das Thermomodul (10-14) eine kreisförmige Konfiguration aufweist und die Thermoelemente (40-43) ringförmig sind und axial, radial oder gemäß einer axialen und radialen Kombination gestapelt sind.

11. Thermogenerator nach Anspruch 1, **dadurch gekennzeichnet, dass** die Thermoelemente (43) aus Teilen aus magnetokalorischem Werkstoff ausgebildet sind.

12. Thermogenerator nach Anspruch 1, **dadurch gekennzeichnet, dass** die Thermoelemente (40-42) eines oder mehrere Teile (60-62) aus magnetokalorischem Werkstoff aufweisen, die von einem Trägerteil (70) getragen sind.

13. Thermogenerator nach Anspruch 12, **dadurch gekennzeichnet, dass** das Trägerteil (70) um die Teile (60-62) aus magnetokalorischem Werkstoff herum abgeformt ist.

14. Thermogenerator nach Anspruch 12, **dadurch gekennzeichnet, dass** das Trägerteil (70) aus einem thermisch isolierenden Werkstoff hergestellt ist.

15. Thermogenerator nach Anspruch 14, **dadurch gekennzeichnet, dass** der thermisch isolierende Werkstoff mit Partikeln aus thermisch leitendem Werkstoff geladen ist.

16. Thermogenerator nach Anspruch 12, **dadurch gekennzeichnet, dass** die Teile (60) aus magnetokalorischem Werkstoff Pastillen mit geometrischer Form oder in Form eines kreisförmigen Sektors ausgebildet sind.

17. Thermogenerator nach Anspruch 11 oder 12, **dadurch gekennzeichnet, dass** die Teile (60-62) aus magnetokalorischem Werkstoff glatte Oberflächen aufweisen.

18. Thermogenerator nach Anspruch 11 oder 12, **dadurch gekennzeichnet, dass** die Teile (60-62) aus magnetokalorischem Werkstoff auf mindestens einer ihrer Seiten Reliefs aufweisen.

19. Thermogenerator nach Anspruch 18, **dadurch gekennzeichnet, dass** mindestens eine der Seiten Nuten (63,64) aufweist, die angeordnet sind, um Wirbel in dem Wärmeübertragungsfluid zu erzeugen.

20. Thermogenerator nach Anspruch 1, **dadurch gekennzeichnet, dass** die Thermoelemente (40-43) in mindestens zwei getrennte Thermosektoren (53) unterteilt sind, die jeweils einen Kanal (50) aufweisen, der durch eine Eintrittsöffnung (51) und eine Austrittsöffnung (52) versorgt wird.

21. Thermogenerator nach Anspruch 20, **dadurch gekennzeichnet, dass** die Eintritts-(51) und Austrittsöffnungen (52) der Thermosektoren (53) der selben Thermoelementes (40-43) in Reihe, parallel oder gemäß einer Reihen-/Parallelkombination mit dem warmen oder kalten Sammelkreislauf verbunden sind, der diesen entspricht.

22. Thermogenerator nach einem der vorangegangenen Ansprüche, **dadurch gekennzeichnet, dass** er mindestens zwei Thermomodule (10-13) aufweist, und dass die warmen und kalten Sammelkreisläufe durch Verteilerscheiben (20) in Reihe, parallel oder gemäß einer Reihen-/Parallelkombination verbunden sind.

23. Thermogenerator nach einem der vorangegangenen Ansprüche, **dadurch gekennzeichnet, dass** er Schließflansche (30) aufweist, die angeordnet sind, um die Kanäle (50) der äußersten Thermoelemente (40-43) zu schließen und um die Thermoelemente (40-43) mechanisch untereinander zu halten, wobei die Schließflansche (30) Zulauf und (31) Ablauföffnungen (32) aufweisen, um die warmen und kalten Sammelkreisläufe mit den äußeren Kreisläufen zu verbinden.

24. Thermogenerator nach Anspruch 10, **dadurch gekennzeichnet, dass** er eine Innenhülle (4) und/oder eine Außenhülle (5) aufweist, die angeordnet ist, um die Thermomodule (10-13) abzudichten.

25. Thermogenerator nach Anspruch 10, **dadurch gekennzeichnet, dass** er innere Magnetbaugruppen (3), die von einer mit einer Dreh- und/oder einer Translationsbewegung angetriebenen Welle (2) getragen werden, und eine Außenarmatur (6) aufweist, die angeordnet ist, um den durch die Magnetbaugruppen (3) erzeugten Magnetfluss wieder zu schließen.

26. Thermogenerator nach Anspruch 10, **dadurch gekennzeichnet, dass** er innere und äußere Magnetbaugruppen (3) aufweist, wobei mindestens eine der Magnetbaugruppen (3) von einer mit einer Dreh- und/oder einer Translationsbewegung angetriebenen Welle (2) getragen wird.

27. Thermogenerator nach Anspruch 1, **dadurch gekennzeichnet, dass** das Wärmeübertragungsfluid flüssig, gasförmig oder zweiphasig ist.
